# EUROPÄISCHE PATENTANMELDUNG

(11) **EP 2 255 913 A1**
(43) Veröffentlichungstag der Anmeldung: **01.12.2010**
(21) Anmeldenummer: 09006754.7
(22) Anmeldetag: 19.05.2009
(51) Int. Cl.: B23K 1/002, B23K 35/00, B23K 35/02, B23K 20/16, B23K 35/24

(54) **Komponente mit einer Schicht aus Schmelzpunkterniedriger, Bauteil mit innen eingelöteter Komponente und Verfahren zum Löten**

(71) Anmelder: SIEMENS AKTIENGESELLSCHAFT, 80333 München (DE)
(72) Erfinder: Ahmad, Fathi, 41564 Kaarst (DE); Heinecke, Brigitte, Dr., 45468 Mülheim an der Ruhr (DE); Vosberg, Volker, Dr., 45476 Mülheim an der Ruhr (DE)

(57) **Zusammenfassung**

Das Verbinden von innenliegenden Komponenten in Hohlräumen eines Bauteils stellt generell eine Schwierigkeit dar.

Die Bereitstellung einer Komponente mit einem Schmelzpunkterniedriger auf der äußeren Oberfläche und das Einführen in das Innere (16) eines Bauteils (1, 120, 130) stellt eine Lösung des o. g. Problems dar, da hier die Lötung leicht durch eine Erwärmung von außen erfolgen kann.

## Beschreibung

Die Erfindung betrifft eine Komponente eines Bauteils mit einer Schicht aus einem Schmelzpunkterniedriger, ein Bauteil, das mit einer solchen Komponente hergestellt wird sowie ein Verfahren zum Verlöten dieser Komponente mit dem Bauteil.

Lotverbindungen sind bekannt, um Komponenten miteinander zu verbinden, wobei zwei miteinander zu verbindende Komponenten aneinandergelegt werden und erst dann ein Lot hinzugefügt wird, welches erwärmt wird und zwischen die Kontaktflächen der zu verbindenden Komponenten fließt und sie nach dem Erstarren miteinander verbindet.

Dies ist an schwer zugänglichen Stellen nicht möglich.

Es ist daher Aufgabe der Erfindung o. g. Problem zu lösen.

Die Aufgabe wird gelöst durch eine Komponente mit einer Schicht aus einem Schmelzpunkterniedriger gemäß Anspruch 1, durch ein Bauteil gemäß Anspruch 8 mit einer solchen Komponente und durch ein Verfahren zum Löten gemäß Anspruch 10.

In den Unteransprüchen sind weitere vorteilhafte Maßnahmen aufgelistet, die beliebig miteinander kombiniert werden können, um weitere Vorteile zu erzielen.
Es zeigen:
- Figur 1: ein Teil eines Querschnitts eines Bauteils,
- Figur 2: eine Komponente mit einer Schicht aus einem Schmelzpunkterniedriger,
- Figur 3 - 6: Komponenten im Querschnitt,
- Figur 7: eine Turbinenschaufel und
- Figur 8: eine Liste von Superlegierungen.

Die Beschreibung und die Figuren stellen nur Ausführungsbeispiele der Erfindung dar.

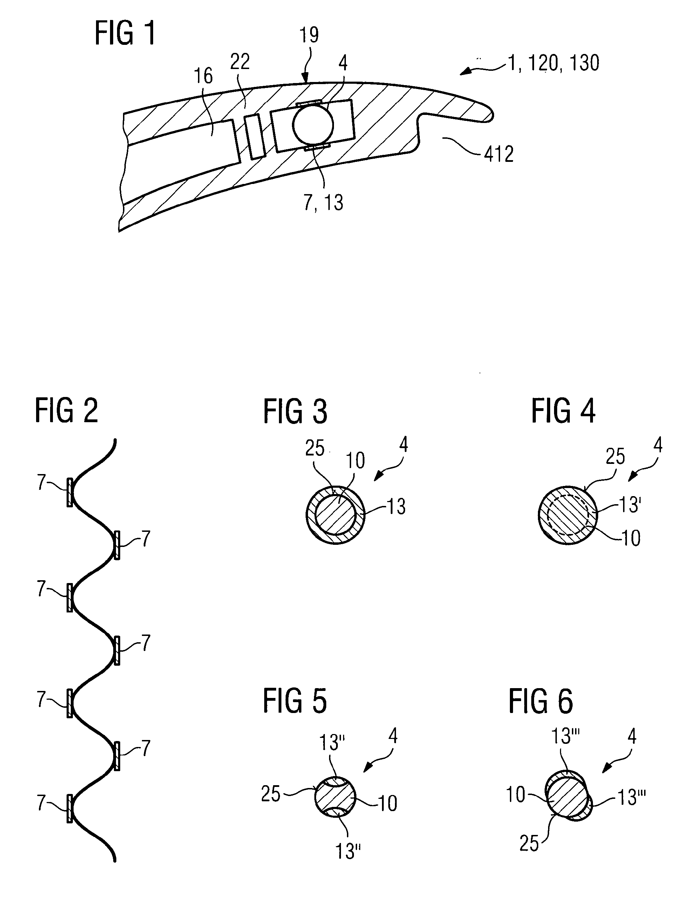

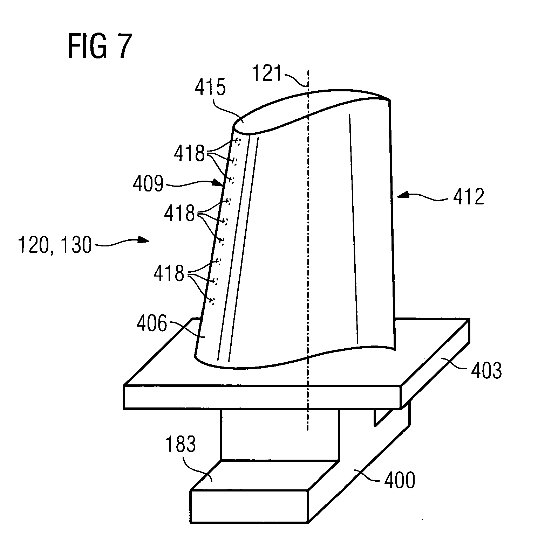

Figur 1 zeigt ein hohles Bauteil 1, 120, 130 (Figur 7) im Querschnitt.

Die Erfindung wird anhand von hohlen Turbinenschaufeln 120, 130 näher erläutert, ohne dass dies einschränkend ist.

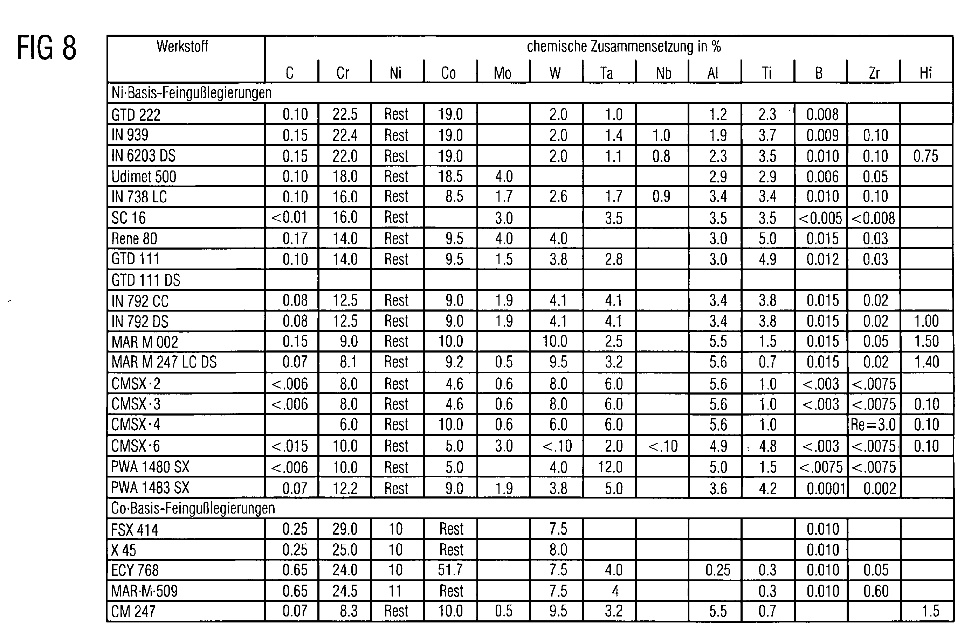

Das Material der Turbinenschaufel 120, 130 weist eine kobalt- oder nickelbasierte Legierung (Fig. 8) auf.
Die Turbinenschaufel 120, 130 weist im Innern einen Hohlraum 16 auf und eine Abströmkante 412 (Fig. 7), bei der im vorgelagerten Hohlraum eine Komponente 4 oder ein Drosseldraht 4 zur Luftdrosselung eingebaut wird.

Nach dem Stand der Technik wird der Drosseldraht 4 durch Einklemmen befestigt, was jedoch aufgrund der Temperaturschwankungen und mechanischen Belastungen während des Einsatzes des Bauteils keine sichere Verbindung darstellt.
Daher ist es wünschenswert, diesen Drosseldraht 4 fest mit dem Bauteil 1, 120, 130 zu verbinden.

Der Drosseldraht 4 weist im Querschnitt gemäß Figur 2 einen Kern 10 aus einem Metall auf. Das Material des Kerns 10 ist den Bedingungen angepasst, d.h. innerhalb der Turbinenschaufel muss es hohe Temperaturen aushalten und darf nicht zu oxidationsanfällig sein.
Auf dem Kern 10 ist eine äußere Schicht 13 aufgebracht.
Die äußere Schicht 13 weist zumindest einen Schmelzpunkterniedriger auf, vorzugsweise besteht sie daraus.
Als Schmelzpunkterniedriger wird vorzugsweise Bor oder Silizium verwendet.
Die Schicht 13 kann aber auch eine Lotlegierung sein, die zumindest einen Schmelzpunkterniedriger aufweist.

Die Schicht 13 kann auf verschiedene Art und Weise aufgebracht werden: Sie kann auf den Drosseldraht 4 aufgesprüht (Schlickerauftrag, Plasmaspritzen) sein.

Ebenso ist es vorzugsweise möglich, den Drosseldraht 4 nur lokal (Fig. 1, 6) mit einer Schicht 13 aus einem Schmelzpunkterniedriger zu versehen, wobei diese Stellen die späteren Kontaktstellen 7 darstellen (Fig. 1, 2).

Die Schmelzpunkterniedriger können vorzugsweise auch unter die Oberfläche 25 der Komponente 4 eindiffundiert werden. Dies kann vorzugsweise über den gesamten Querschnitt erfolgen (Fig. 4) oder auch nur lokal (Fig. 5).

Ebenso ist es möglich, den Drosseldraht 4 aus einer speziellen Lotlegierung herzustellen, so dass keine Schicht mit einem Schmelzpunkterniedriger notwendig ist, so dass der Drosseldraht aufgrund seines niedrigeren Schmelzpunkts angeschmolzen werden kann.

Der Drosseldraht 4 kann dann wie nach dem Stand der Technik in den Hohlraum 16 des Bauteils 1, 120, 130 eingebracht werden (Fig. 1).
Dabei wird dann von außen an einer Stelle 19 Wärme zugeführt, so dass sich die der Stelle 19 gegenüberliegenden und innenliegenden Kontaktstellen 7 des Drosseldrahts 4 mit dem Bauteil 1, 120, 130 erwärmen. Aufgrund des niedrigeren (im Vergleich zum Kern 10 und des Bauteils 120, 130) Schmelzpunktes der Lotlegierung der Schicht 13, 13" bildet sich eine Schmelze zwischen der Komponente 4 und dem Bauteil 120, 130 (Fig. 3, 6).
Aufgrund der Schmelzpunkterniedrigung durch die Schmelzpunkterniedriger kommt es an den Kontaktstellen 7 der Komponente 4 und dem Bauteil 1, 120, 130 zu einer Schmelze im Kern 10 der Komponente 4 und/oder des Bauteils 1, 120, 130 (Fig. 3, 6).

Ebenso kann sich die Schmelze nur in der Komponente 4 ausbilden, dort wo Schmelzpunkterniedriger vorhanden sind (Fig. 4, 5).
Nach Erstarrung der Schmelze kommt es zu einer festen Verbindung des Drosseldrahts 4 mit dem Bauteil 1, 120, 130.

Die Figur 7 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Komponente (4) mit einer äußeren Oberfläche (25) zum Einlöten,
bei dem die zu verlötende Komponente (4) zumindest stellenweise eine äußere Schicht (13, 13', 13", 13"') auf oder unterhalb ihrer Oberfläche (25) aus zumindest einem oder mit zumindest einem Schmelzpunkterniedriger aufweist.

2. Komponente nach Anspruch 1,
bei der die Schicht (13, 13', 13", 13"') zumindest einen, insbesondere nur einen Schmelzpunkterniedriger aufweist.

3. Komponente nach Anspruch 1 oder 2,
bei der die Schicht (13, 13"') nur aus zumindest einem, insbesondere aus nur einem Schmelzpunkterniedriger besteht.

4. Komponente nach Anspruch 1, 2 oder 3,
bei dem der Schmelzpunkterniedriger nur stellenweise (13", 13"') auf oder unter der äußeren Oberfläche (25) der Komponente (4) vorhanden ist.

5. Komponente nach Anspruch 1, 2 oder 3,
bei der die Schicht (13, 13') auf oder unterhalb der gesamten Oberfläche (25) vorhanden ist.

6. Komponente nach Anspruch 1, 2, 3, 4 oder 5,
bei der die Schicht (13, 13"') auf der Oberfläche (25) vorhanden ist.

7. Komponente nach Anspruch 1, 2, 4, 5 oder 6,
bei der der Schmelzpunkterniedriger unterhalb der Oberfläche (25) vorhanden ist,
insbesondere eindiffundiert ist.

8. Bauteil (1, 120, 130) mit einer Komponente (4) nach Anspruch 1, 2, 3, 4, 5, 6 oder 7,
das (1, 120, 130) im Innern (16) eine Komponente (4) aufweist,
die (4) im Innern (16) mit dem Bauteil (1, 120, 130) verlötet ist.

9. Bauteil nach Anspruch 8,
bei dem die Komponente (4) nur stellenweise an Kontaktpunkten (7) mit dem Bauteil (1, 120, 130) verlötet ist.

10. Verfahren zur Herstellung zur Lötung eines Bauteils (1, 120, 130),
bei dem eine Komponente (4) mit einem Schmelzpunkterniedriger,
insbesondere eine Komponente (4) nach Anspruch 1, 2, 3, 4, 5, 6 oder 7,
in das Innere (16) des Bauteils (1, 120, 130) eingebracht wird und von außen durch eine Wand (22) des Bauteils (1, 120, 130) erwärmt wird,
so dass die Kontaktstellen (7) der Komponente (4) mit dem Bauteil (1, 120, 130) aufschmelzen und nach Rücknahme der Wärmequelle erstarren,
so dass sich eine feste Verbindung von dem Bauteil (1, 120, 130) mit der Komponente (4) an der Kontaktstelle (7) ergibt.
